# EUROPÄISCHE PATENTSCHRIFT

(11) **EP 0 421 253 B1**
(45) Veröffentlichungstag und Bekanntmachung des Hinweises auf die Patenterteilung: **16.03.1994**
(21) Anmeldenummer: 90118446.5
(22) Anmeldetag: 26.09.1990
(51) Int. Cl.: H02G 15/113, H02G 15/117

(54) **Vorrichtung zum Verschliessen einer Kabelmuffe für das Verbinden und Abzweigen von Kabeln, insbesondere Fernmeldekabeln**
Closure device of a cable sleeve for connecting and tapping of cables, particularly of telecommunications cables
Dispositif de fermeture d'un manchon de câbles pour la connexion et la dérivation de câbles, en particulier de câbles de télécommunications

(30) Priorität: 30.09.1989 DE 3932734; 14.12.1989 DE 8914665 U
(43) Veröffentlichungstag der Anmeldung: 10.04.1991
(73) Patentinhaber: Stewing Kunststoffbetrieb GmbH Dorsten, 46282 Dorsten (DE)
(72) Erfinder: Dehling, Helmut, Dipl.-Ing., W-4270 Dorsten 11 (DE)
(74) Vertreter: Honke, Manfred, Dr.-Ing.

(56) Entgegenhaltungen:
- EP-A- 0 320 189
- DE-A- 2 249 368
- DE-U- 8 914 665
- US-A- 4 538 021

## Beschreibung

Die Erfindung betrifft eine Vorrichtung zum Verschließen einer Kabelmuffe für das Verbinden und Abzweigen von Kabeln, insbes. Fernmeldekabeln, mit einem längsgeteilten Muffenrohr und die Längsteilung begrenzenden Verschlußprofilen mit jeweils einer Hinterschneidung und mit einem in die Hinterschneidungen eingreifenden und die Verschlußprofile übergreifenden Verschluß.

Zum Verschließen von längsgeteilten Muffenrohren kennt man schwalbenschwanzartige Klemmschienen mit konisch zueinander verlaufenden Schenkeln. Solche Klemmschienen werden auf die Verschlußprofile, welche die Längsteilung des Muffenrohres begrenzen und parallel zueinander verlaufen, aufgeschoben. Im Zuge des Aufschiebens der Klemmschienen von der einen und anderen Seite des Muffenrohres wird das Muffenrohr im Bereich seiner Längsteilung aufgrund der konisch verlaufenden Schenkel zwangsläufig zusammengezogen. Da das Aufschieben der Klemmschienen manuell erfolgt, nämlich mit der einen Hand während die andere Hand versucht, den aus der Längsteilung resultierenden Längsschlitz des Muffenrohres soweit wie möglich zu verengen, ist das Verschließen des Muffenrohres verhältnismäßig umständlich und schwierig. Darüber hinaus müssen die aufgeschobenen Klemmschienen mittels eines Spannbandes und Spannschlosses axial gegeneinander verspannt werden, um die Klemmschienen in montiertem Zustand zusammenzuhalten. Auch das ist aufwendig.

Im übrigen kennt man eine Vorrichtung zum Verschließen einer Kabelmuffe (US-A-4 538 021), dessen Muffenrohr aus zwei Muffenhälften besteht und keine die Längsteilung begrenzenden Verschlußprofile, sondern eine Verzahnung aufweist. Bei dieser bekannten Ausführungsform ist an der einen Muffenrohrhälfte an einem Längsrand ein mäanderförmiger Spannbügel schwenkbar gelagert, an dem wiederum eine Mehrzahl von Spannhebeln schwenkbar gelagert ist. Die andere Muffenrohrhälfte weist an dem zugeordneten Längsrand Spannocken auf, welche bei verschlossener Kabelmuffe von den Spannhebeln hintergriffen werden. Dabei übergreift der mäanderförmige Spannbügel die Längsteilung. Auf diese Weise werden die Längsränder des Muffenrohres unter Zwischenschaltung einer Längsdichtung zwar zusammengedrückt, jedoch müssen die zahlreichen Spannhebel einzeln betätigt werden. Darüber muß der mäanderförmige Spannbügel unter Verwirklichung einer schwenkbaren Lagerung unverlierbar an die eine Muffenrohrhälfte angeschlossen sein. Das ist in fertigungstechnischer Hinsicht aufwendig.

Ferner kennt man eine Verbindungs- und Abzweigmuffe für Fernmeldekabel (DE-A-2 249 368), bei welcher singuläre Kniehebelverschlüsse bzw. Spannhebelverschlüsse verwirklicht sind, die in Umfangsrichtung oder Längsrichtung der Kabelmuffe angeordnet sind. Diese Spannhebelverschlüsse müssen an einer Muffenrohrhälfte befestigt sein und sind daher ebenfalls in fertigungstechnischer Hinsicht aufwendig.

Der Erfindung liegt die Aufgabe zugrunde, eine Vorrichtung zum Verschließen einer Kabelmuffe der eingangs beschriebenen Ausführungsform zu schaffen, welche schnell und einfach montiert werden kann und einen einwandfreien Verschluß des längsgeteilten Muffenrohres gewährleistet.

Diese Aufgabe löst die Erfindung bei einer gattungsgemäßen Vorrichtung dadurch, daß der Verschluß als Verschlußspanner mit einer Abdeckschale und einem Spannbügel ausgebildet ist, daß die Abdeckschale an ihrer einen Längsseite eine Klaue zum Hintergreifen des einen Verschlußprofils aufweist und an ihrer anderen Längsseite der Spannbügel schwenkbar gelagert ist und in eingeschwenktem Zustand eine Klaue zum Hintergreifen des anderen Verschlußprofils bildet, und daß bei über einen Totpunkt hinaus eingeschwenktem Spannbügel die Längsränder des Muffenrohres zusammengedrückt sind. Im Rahmen der Erfindung wird man zum Verschließen einer herkömmlichen Kabelmuffe regelmäßig zwei Verschlußspanner verwenden. Grundsätzlich können jedenfalls mehrere Verschlußspanner nebeneinander eingesetzt werden. - Die Erfindung geht von der Erkenntnis aus, daß sich das längsgeteilte Muffenrohr einer Kabelmuffe dann besonders einfach und schnell einwandfrei verschließen läßt, wenn ein Verschlußspanner zur Verfügung steht, der die beiden parallel verlaufenden Verschlußprofile der Längsteilung hintergreift und über einen Totpunkt hinaus derart betätigt werden kann, daß die beiden Längsränder des Muffenrohres unter Erzeugung einer Verschlußspannung zusammengezogen und zusammengehalten werden. Ein derartig gespannter Verschlußspanner, welcher orthogonal zur Längsteilung des Muffenrohres betätigt wird, ist in Axialrichtung infolge der Spannwirkung einwandfrei auf den von ihm übergriffenen Verschlußprofilen fixiert. Dabei wird unter Zwischenschaltung eines Dichtmittels zugleich eine einwandfreie Abdichtung der Längsteilung erreicht.

Weitere erfindungswesentliche Maßnahmen sind im folgenden aufgeführt. So kann die Abdeckschale als Stahlblechschale ausgeführt sein und Versteifungssicken bzw. -rippen aufweisen. Erfindungsgemäß ist die Klaue der Abdeckschale von einer Umbiegung ihres freien Längsrandes gebildet. Eine derartige Abdeckschale läßt sich verhältnismäßig einfach fertigen. Weiter lehrt die Erfindung, daß die Abdeckschale an ihrer der Klaue abgewandten Längsseite einen Scharnierbolzen und Schwenkausnehmungen für den unter Bildung eines Scharniers schwenkbar angeschlossenen Spannbügel aufweist. Dadurch wird ein leichtgängiges Spannen des erfindungsgemäßen Verschlußspanners ermöglicht. Um einen ausgeprägten Totpunkt im Zuge des Verspannens überfahren zu können, kann die Abdeckschale eine Abwinkelung mit dem Scharnierbolzen und den Schwenkausnehmungen aufweisen. Dadurch ist der Spannbügel versetzt zu der Abdeckschale angeordnet und wird eine Anpassung an den Außenumfang des Muffenrohres erreicht. Außerdem lehrt die Erfindung, daß der Spannbügel im Bereich der Schwenkausnehmungen sich orthogonal zur Scharnierachse erstreckende Einstecktaschen zum Einstecken eines Betätigungswerkzeuges aufweist und die Einstecktaschen Lager für den Scharnierbolzen besitzen. Der Spannbügel bildet einerseits die eine Klaue des Verschlußspanners, kragt andererseits mit seinen Einstecktaschen über die Abdeckschale vor. Um das Zusammenziehen der Verschlußprofile im Bereich der Längsteilung beim Verschließen des Muffenrohres und das Lösen des Verschlußspanners zu erleichtern, läßt sich ein Betätigungswerkzeug in die Einstecktaschen einstecken. Mit Hilfe eines solchen Betätigungswerkzeuges wird die Hebelwirkung für den Spannvorgang bzw. Lösungsvorgang erheblich vergrößert. Zweckmäßigerweise besteht der Spannbügel aus Stahlblech mit sich orthogonal zur Scharnierachse erstrekkenden Scharnierlaschen, welche eingeformte Lagerausnehmungen für den Scharnierbolzen und senkrecht zu den Lagerausnehmungen eingeformte Steckausnehmungen für das Betätigungswerkzeug aufweisen, wobei auf den Scharnierlaschen unter Bildung der Einstecktaschen die Lagerausnehmungen begrenzende und die Steckausnehmungen ergänzende Deckbleche befestigt sind. Dadurch läßt sich der Spannbügel wie die Abdeckschale in einfacher Weise aus einem Stahlbleckzuschnitt rationell herstellen.

Die durch die Erfindung erreichten Vorteile sind im wesentlichen darin zu sehen, daß eine Vorrichtung zum Verschließen einer Kabelmuffe für das Verbinden und Abzweigen von Kabeln, insbes. Fernmeldekabeln, verwirklicht wird, die als Verschlußspanner ausgebildet ist und dadurch ein einwandfreies Zusammenziehen und Zusammenhalten der Längsränder des längsgeteilten Muffenrohres unter Erzeugung eines Spanneffektes gewährleistet. Darüber hinaus läßt sich der erfindungsgemäße Verschlußspanner in besonders einfacher und schneller Weise montieren sowie demontieren. Im ganzen wird das Verschließen der Kabelmuffe bzw. des längsgeteilten Muffenrohres mit dem erfindungsgemäßen Verschlußspanner erheblich vereinfacht.

Im folgenden wird die Erfindung anhand einer lediglich ein Ausführungsbeispiel darstellenden Zeichnung näher erläutert; es zeigen:

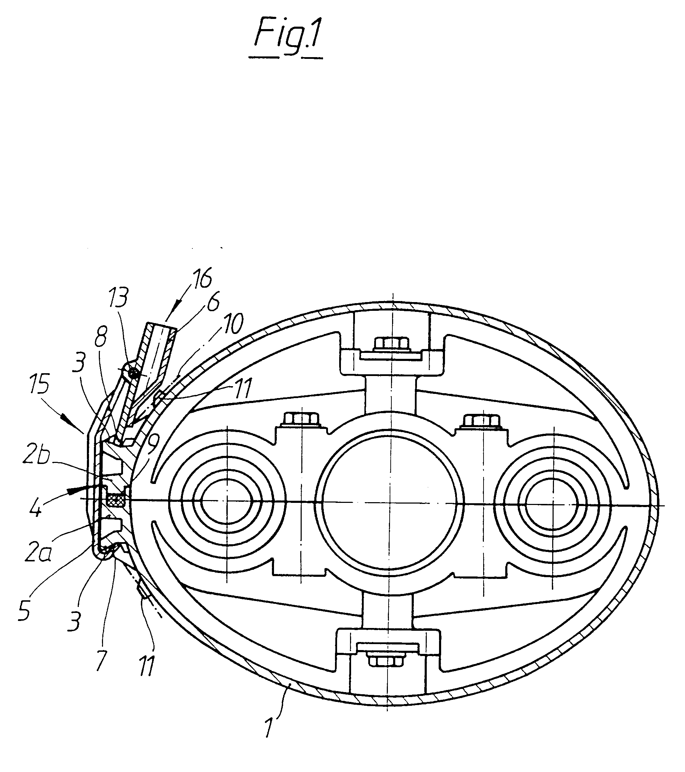

- Fig. 1: einen Vertikalschnitt durch das verschlossene Muffenrohr einer Kabelmuffe mit einem erfindungsgemässen Verschlußspanner,

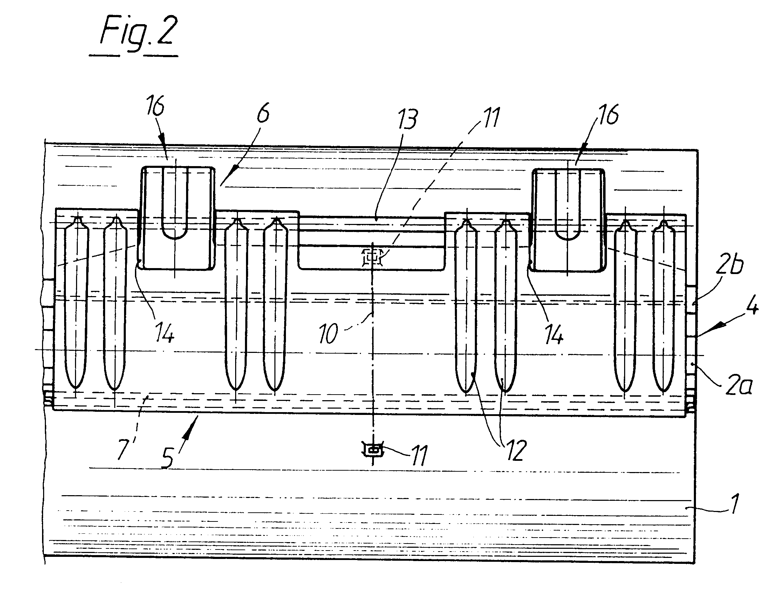

- Fig. 2: den Gegenstand nach Fig. 1 in Seitenansicht mit lediglich einem Verschlußspanner,

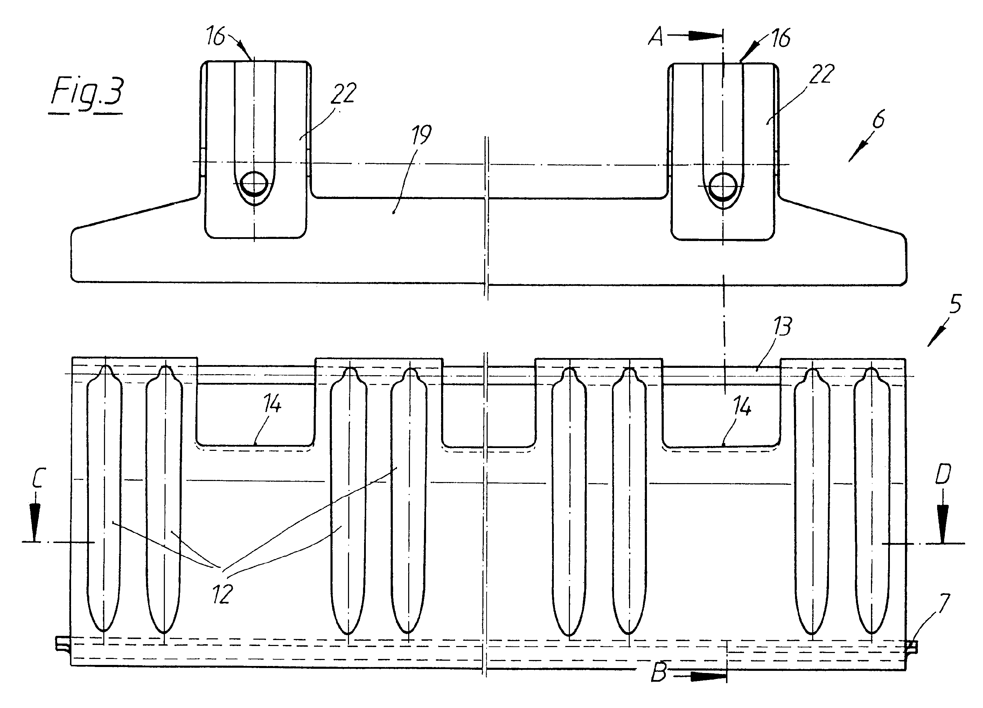

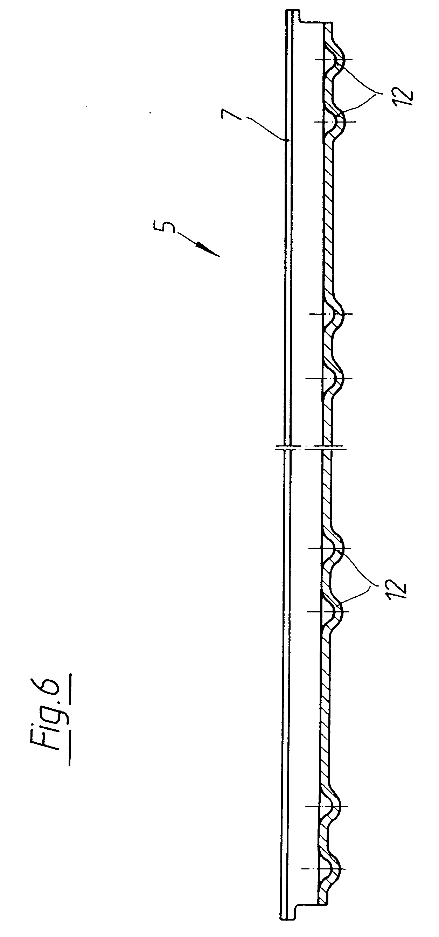

- Fig. 3: einen erfindungsgemäßen Verschlußspanner in explosiver Seitenansicht,

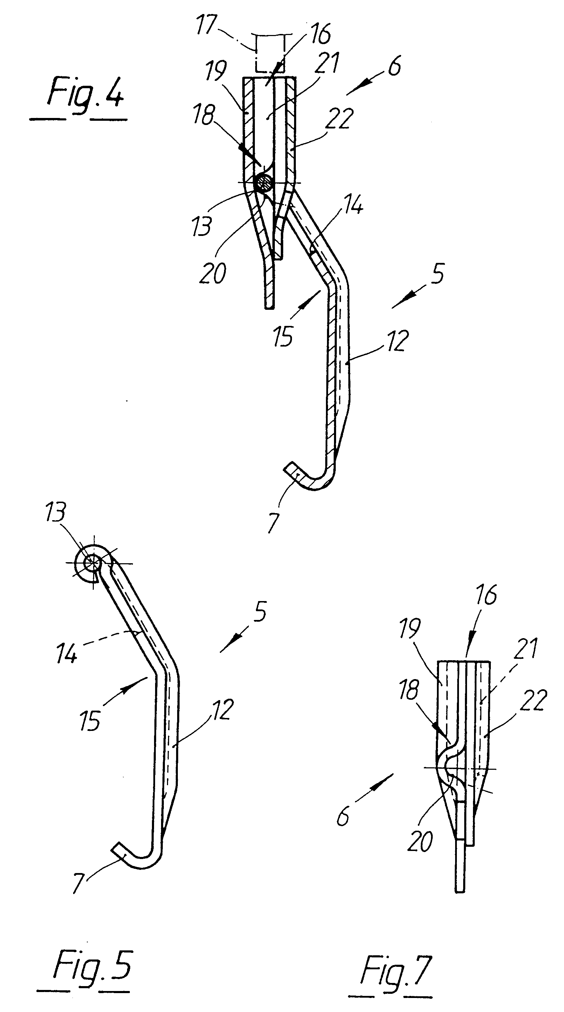

- Fig. 4: einen Schnitt A-B durch den Gegenstand nach Fig. 1 in zusammengesetztem Zustand,
- Fig. 5: die Abdeckschale für den Gegenstand nach Fig. 3 in Seitenansicht,
- Fig. 6: einen Schnitt C-D durch die Abdeckschale gemäß Fig. 3 und
- Fig. 7: den Spannbügel gemäß Fig. 3 in Seitenansicht.

In den Figuren ist eine Vorrichtung zum Verschließen einer Kabelmuffe für das Verbinden und Abzweigen von Kabeln, insbes. Fernmeldekabeln, dargestellt. Die Kabelmuffe weist ein längsgeteiltes Muffenrohr 1 aus biegeelastischem bzw. thermoplastischem Kunststoff auf. Die Längsteilung wird von Verschlußprofilen 2a, 2b mit jeweils einer Hinterschneidung 3 begrenzt. Die aus der Längsteilung resultierenden Längsränder 4 des Muffenrohres 1 sind mittels eines in die Hinterschneidungen 3 eingreifenden und die Verschlußprofile 2 übergreifenden Verschlusses in Schließstellung zusammengehalten. Der Verschluß ist als Verschlußspanner mit einer Abdeckschale 5 und einem Spannbügel 6 ausgebildet. Die Abdeckschale 5 weist an ihrer einen Längsseite eine Klaue 7 zum Hintergreifen des einen Verschlußprofils 2a auf, während an ihrer anderen Längsseite der Spannbügel 6 schwenkbar gelagert ist. Der Spannbügel 6 bildet in eingeschwenktem Zustand eine Klaue 8 zum Hintergreifen des anderen Verschlußprofils 2b. Bei über einen Totpunkt hinaus eingeschwenktem Spannbügel 6 sind die Längsränder 4 des Muffenrohres 1 zusammengedrückt, ist die Längsteilung des Muffenrohres 1 unter Zwischenschaltung eines Dichtmittels 9 einwandfrei abgedichtet. In gespanntem Zustand kann der Verschlußspanner 5, 6 zusätzlich gegen unbeabsichtigtes Lösen gesichert werden, beispielsweise mittels einer Sicherung 10, die einerseits an den Verschlußspanner 5, 6, andererseits an Haltenocken 11 auf dem Außenumfang des Muffenrohres 1 verankerbar ist.

Die Abdeckschale 5 ist als Stahlblechschale ausgeführt und weist Verstärkungssicken 12 auf. Die Klaue 7 der Abdeckschale 5 ist von einer Umbiegung ihres freien Längsrandes gebildet. Die Abdeckschale 5 weist an ihrer der Klaue 7 abgewandten Längsseite einen Scharnierbolzen 13 und Schwenkausnehmungen 14 für den unter Bildung eines Scharniers schwenkbar angeschlossenen Spannbügel 6 auf. Ferner besitzt die Abdeckschale 5 eine Abwinkelung 15 mit dem Scharnierbolzen 13 und den Schwenkausnehmungen 14 zur Anpassung an den Außenumfang des Muffenrohres 1 im Bereich seiner Längsteilung. Der Spannbügel 6 weist im Bereich der Schwenkausnehmungen 14 sich orthogonal zur Scharnierachse erstreckende Einstecktaschen 16 zum Einstecken eines angedeuteten Betätigungswerkzeuges 17 auf. Die Einstecktaschen 16 besitzen Lager 18 für den Scharnierbolzen 13. Der Spannbügel 6 besteht ebenfalls aus Stahlblech, jedoch mit sich orthogonal zur Scharnierachse erstreckenden Scharnierlaschen 19, welche eingeformte Lagerausnehmungen 20 für den Scharnierbolzen 13 und senkrecht zu den Lagerausnehmungen 20 eingeformte Steckausnehmungen 21 für das Betätigungswerkzeug 17 aufweisen. Auf den Scharnierlaschen 19 sind unter Bildung der Einstecktaschen 16 die Lagerausnehmungen 20 begrenzende bzw. lagerbildende und die Steckausnehmungen 21 ergänzende Deckbleche 22 befestigt.

## Patentansprüche

1. Vorrichtung zum Verschließen einer Kabelmuffe für das Verbinden und Abzweigen von Kabeln, insbes. Fernmeldekabeln, mit einem längsgeteilten Muffenrohr (1) und die Längsteilung begrenzenden Verschlußprofilen (2a, 2b) mit jeweils einer Hinterschneidung (3) und mit einem in die Hinterschneidungen (3) eingreifenden und die Verschlußprofile (2a, 2b) übergreifenden Verschluß, **dadurch gekennzeichnet**, daß der Verschluß als Verschlußspanner mit einer Abdeckschale (5) und einem Spannbügel (6) ausgebildet ist, daß die Abdeckschale (5) an ihrer einen Längsseite eine Klaue (7) zum Hintergreifen des einen Verschlußprofils (2a) aufweist und an ihrer anderen Längsseite der Spannbügel (6) schwenkbar gelagert ist und in eingeschwenktem Zustand eine Klaue (8) zum Hintergreifen des anderen Verschlußprofils (2b) bildet, und daß bei über einen Totpunkt hinaus eingeschwenktem Spannbügel (6) die Längsränder (4) des Muffenrohres (1) zusammengedrückt sind.

2. Vorrichtung nach Anspruch 1, dadurch gekennzeichnet, daß die Abdeckschale (5) als Stahlblechschale ausgeführt ist und Versteifungssicken bzw. -rippen (12) aufweist.

3. Vorrichtung nach Anspruch 1 oder 2, dadurch gekennzeichnet, daß die Klaue (7) der Abdeckschale (5) von einer Umbiegung ihres freien Längsrandes gebildet ist.

4. Vorrichtung nach einem der Ansprüche 1 bis 3, dadurch gekennzeichnet, daß die Abdeckschale (5) an ihrer der Klaue (7) abgewandten Längsseite einen Scharnierbolzen (13) und Schwenkausnehmungen (14) für den unter Bildung eines Scharniers schwenkbar angeschlossenen Spannbügel (6) aufweist.

5. Vorrichtung nach einem der Ansprüche 1 bis 4, dadurch gekennzeichnet, daß die Abdeckschale (5) eine Abwinkelung (15) mit dem Scharnierbolzen (13) und den Schwenkausnehmungen (14) aufweist.

6. Vorrichtung nach einem der Ansprüche 1 bis 5, dadurch gekennzeichnet, daß der Spannbügel (6) im Bereich der Schwenkausnehmungen (14) sich orthogonal zur Scharnierachse erstreckende Einstecktaschen (16) zum Einstecken eines Betätigungswerkzeuges (17) aufweist und die Einstecktaschen (16) Lager (18) für den Scharnierbolzen (13) besitzen.

7. Vorrichtung nach einem der Ansprüche 1 bis 6, dadurch gekennzeichnet, daß der Spannbügel (6) aus Stahlblech mit sich orthogonal zur Scharnierachse erstreckenden Scharnierlaschen (19) besteht, welche eingeformte Lagerausnehmungen (20) für den Scharnierbolzen (13) und senkrecht zu den Lagerausnehmungen eingeformte Steckausnehmungen (21) für das Betätigungswerkzeug (17) aufweisen, und daß auf den Scharnierlaschen (19) unter Bildung der Einstecktaschen (16) die Lagerausnehmungen (20) zur Lagerbildung begrenzende und die Steckausnehmungen (21) ergänzende Deckbleche (22) befestigt sind.

## Claims

1. A device for sealing a cable sleeve for the connection and branching of cables, particularly communications cables, with a longitudinally split sleeve tube (1) and sealing profiles (2a, 2b) delimiting the longitudinal split and each having an undercut (3), and with a seal engaging in the undercuts (3) and engaging over the sealing profiles (2a, 2b), characterised in that the seal is constructed as a sealing clamp with a cover shell (5) and a clamping strap (6), that the cover shell (5) has a catch (7) on one of its longitudinal sides for engaging behind one sealing profile (2a) and the clamping strap (6) is pivotally mounted on its other longitudinal side and in its swung-in state forms a catch (8) for engaging behind the other sealing profile (2b), and that when the clamping strap (6) is swung in beyond a dead centre the longitudinal edges (4) of the sleeve tube (1) are pressed together.

2. A device according to claim 1, characterised in that the cover shell (5) is constructed as a sheet steel shell and has stiffening beads or ribs (12).

3. A device according to claim 1 or 2, characterised in that the catch (7) of the cover shell (5) is formed by bending up its free longitudinal edge.

4. A device according to any one of claims 1 to 3, characterised in that on its longitudinal side remote from the catch (7) the cover shell (5) has a hinge pin (13) and swing recesses (14) for the clamping strap (6) which is pivotally attached with the formation of a hinge.

5. A device according to any one of claims 1 to 4, characterised in that the cover shell (5) comprises an angled portion (15) with the hinge pin (13) and the swing recesses (14).

6. A device according to any one of claims 1 to 5, characterised in that the clamping strap (6) comprises insertion pockets (16) extending orthogonally to the hinge axis in the region of the swing recesses (14) for inserting an operating tool (17), and the insertion pockets (16) comprise bearings (18) for the hinge pin (13).

7. A device according to any one of claims 1 to 6, characterised in that the clamping strap (6) consists of sheet steel with hinge plates (19) extending orthogonally to the hinge axis, which hinge plates comprise integrally formed bearing recesses (20) for the hinge pin (13) and insertion recesses (21) for the operating tool (17) formed perpendicularly to the bearing recesses, and that cover plates (22), which delimit the bearing recesses (20) for the formation of the bearings and which supplement the insertion recesses (21), are attached to the hinge plates (19) with the formation of the insertion pockets (16).

## Revendications

1. Dispositif de fermeture d'une jonction de câble, pour relier et ramifier des câbles, en particulier des câbles de télécommunication, avec un tube de jonction (1), divisé longitudinalement, et des profilés de fermeture (2a, 2b) délimitant la division longitudinale, avec chaque fois une contre-dépouille (3) et avec une fermeture, s'engageant dans les contre-dépouilles (3) et enchâssant les profilés de fermeture (2a, 2b), caractérisé en ce que la fermeture est réalisée sous forme de tendeur de fermeture, avec une coque de recouvrement (5) et un étrier de serrage (6), en ce que la coque de recouvrement (5) présente, sur l'une de ses faces longitudinales, une griffe (7), destinée à saisir par l'arrière le premier profilé de fermeture (2a) et, sur son autre face longitudinale, l'étrier de serrage (6) est montée pivotant et forme, a l'état rétracté pivoté une griffe (8), destinée à saisir par l'arrière l'autre profilé de fermeture (2b), et en ce que les bords longitudinaux (4) du tube de jonction (1) sont comprimés l'un sur l'autre lorsque l'étrier de serrage (6) est pivoté rétracté en ayant passé par un point mort.

2. Dispositif selon la revendication 1, caractérisé en ce que la coque de recouvrement (5) est réalisée sous forme de coque en tôle d'acier et présente des moulures ou des nervures de renforcement (12).

3. Dispositif selon la revendication 1 ou 2, caractérisé en ce que la griffe (7) de la coque de recouvrement (5) est formée par une courbure de son bord longitudinal libre.

4. Dispositif selon l'une des revendications 1 à 3, caractérisé en ce que la coque de recouvrement (5) présente sur sa face longitudinale opposée à la griffe (7) un boulon de charnière (13) et des évidements de pivotement (14), pour l'étrier de serrage (6) raccordé pivotant en formant une charnière.

5. Dispositif selon l'une des revendications 1 à 4, caractérisé en ce que la coque de recouvrement (5) présente un pliage (15) avec le boulon charnière (13) et les évidements de pivotement (14).

6. Dispositif selon l'une des revendications 1 à 5, caractérisé en ce que l'étrier de serrage (6) présente, dans la zone des évidements de pivotement (14), des poches d'enfilage (16) s'étendant perpendiculairement par rapport à l'axe de charnière, en vue d'enfiler un outil d'actionnement (17), et les poches d'enfilage (16) comportant des paliers pour le boulon charnière (13).

7. Dispositif selon l'une des revendications 1 à 6, caractérisé en ce que l'étrier de serrage (6) est en tôle d'acier, avec des pattes de charnière (19), s'étendant perpendiculairement par rapport à l'axe de charnière et présentant des évidements de palier (20) creusés, pour les boulons de charnière (13) et des évidements d'enfilage (21), creusés perpendiculairement par rapport aux évidements de palier, pour l'outil d'actionnement (17), et en ce que des tôles de couverture (22) sont fixées sur les pattes de charnière (19), en formant les poches d'enfilage (16), délimitant les évidements de palier (20) pour former des paliers et complétant les évidements d'enfilage (21).
